# EUROPÄISCHE PATENTSCHRIFT

(11) **EP 2 393 403 B1**
(45) Veröffentlichungstag und Bekanntmachung des Hinweises auf die Patenterteilung: **17.07.2013**
(21) Anmeldenummer: 10702313.7
(22) Anmeldetag: 04.02.2010
(51) Int. Cl.: A47J 27/05, A47J 36/20

(54) **KOCHGEFÄß**
COOKING VESSEL
RÉCIPIENT DE CUISSON

(30) Priorität: 06.02.2009 DE 102009007844
(43) Veröffentlichungstag der Anmeldung: 14.12.2011
(73) Patentinhaber: WMF Württembergische Metallwarenfabrik AG, 73309 Geislingen/Steige (DE)
(72) Erfinder: RAMMINGER, Peter, 73312 Aufhausen (DE); TATZELT, Peter, 73340 Amstetten (DE)
(74) Vertreter: BRP Renaud & Partner
(86) Internationale Anmeldenummer: PCT/EP2010/051331
(87) Internationale Veröffentlichungsnummer: WO 2010/089335

(56) Entgegenhaltungen:
- WO-A2-2009/126237
- DE-U1- 9 403 407
- DE-U1-202006 005 562
- GB-A- 2 234 669

## Beschreibung

Die vorliegende Erfindung betrifft ein Kochgefäß mit einem Gefäßkörper und einem Deckel gemäß dem Oberbegriff des Anspruchs 1.

Aus der DE 20 2006 005 562 U1 ist ein gattungsgemäßes Kochgefäß bekannt, bei welchem im Deckel ein Thermometer befestigt ist. Hierdurch soll auf einfache Weise die Temperatur des Kochvorgangs auch dann verfolgt werden können, wenn dies bspw. durch visuell sichtbare Anzeichen nicht mehr möglich ist. So soll bspw. sichergestellt werden, dass auch bei einem sanften Garvorgang eine zum Abtöten sämtlicher schädlicher Mikroorganismen notwendige Temperatur erreicht und über den notwendigen Zeitraum aufrechterhalten wurde. Durch die Fixierung des Thermometers am Deckel wird darüber hinaus bereits werkseitig eine vordefinierte Position vorgegeben, wodurch eine fehlerhafte Anordnung des Thermometers durch den Benutzer verhindert werden soll.

Aus der WO 2009/126237 A2 ist ein Kochgefäß mit einem Gefäßkörper und einem Deckel bekannt. Das Kochgefäß weist zumindest ein auf den Gefäßkörper stapelbaren Einsatz auf, auf den wahlweise ein weitere Einsatz oder der Deckel aufsetzbar ist. Der wenigstens eine Einsatz besitzt einen dampfdurchlässigen Boden, wobei der Dampf durch entsprechende Durchlassöffnungen im Boden tritt. Der wenigstens eine Einsatz kann darüber hinaus einen innen liegenden Rahmen mit dampfdurchlässigen Schlitzen aufweisen, wobei zwischen dem eingesetzten Rahmen und einer Außenwand des Einsatzes keine dampfdurchlässigen Schlitze/Durchlassöffnungen im Boden vorgesehen sind.

Aus der DE 94 93 407 U1 ist wiederum ein Kochgefäß mit zumindest einen auf einen Gefäßkörper stapelbaren Einsatz, auf welchen wahlweise ein weitere Einsatz oder ein Deckel aufsetzbar ist. Der Einsatz besitzt dabei einen dampfdurchlässigen Boden mit entsprechenden Durchlassöffnungen.

Aus der GB 2 234 669 A ist ein weiteres Kochgefäß mit einem Gefäßkörper und einem Deckel bekannt. Darüber hinaus ist zumindest ein auf den Gefäßkörper stapelbarer Einsatz vorgesehen, der einen dampfdurchlässigen Boden aufweist. Der wenigstens eine Einsatz weist darüber hinaus einen innen liegenden Rahmen mit dampfdurchlässigen Schlitzen auf.

Moderne Kochgefäße erlauben mehr und mehr ein besonders schonendes Zubereiten von Speisen, wobei aufgrund der stetig steigenden Energiekosten seitens des Verbrauchers auch mehr und mehr Augenmerk auf ein energiesparendes Zubereiten der Speisen gerichtet wird.

Die vorliegende Erfindung beschäftigt sich mit dem Problem, für ein Kochgefäß der gattungsgemäßen Art, eine verbesserte Ausführungsform anzugeben, mit welcher ein insbesondere energiesparendes Zubereiten von Speisen möglich ist und welche darüber hinaus besonders flexibel einsetzbar ist.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, ein Kochgefäß grundsätzlich mit einem Gefäßkörper und einem Deckel sowie zumindest einem zwischen dem Gefäßkörper und dem Deckel einsetzbaren Einsatz zu versehen. Der Einsatz ist dabei auf den Gefäßkörper stapelbar und kann wahlweise einen weiteren Einsatz oder den Deckel tragen. Denkbar ist hierbei nicht nur das Anordnen eines einzigen Einsatzes, sondern bspw. auch von zwei oder mehr Einsätzen übereinander. Hierdurch kann ein besonders im Bezug auf sein Garvolumen flexibles Kochgefäß geschaffen werden, mit welchem gleichzeitig eine größere Menge an Speisen angerichtet werden kann. Denkbar ist hierbei insbesondere, dass komplette Menüs im Kochgefäß nahezu zeitgleich zubereitet werden können, wobei die einzelnen Einsätze jeweils mit Speisen bestückt sind, die bspw. eine individuelle Gartemperatur bzw. eine individuelle Garzeit aufweisen. Denkbar ist somit, dass bspw. im Gefäßkörper Fleisch und in zwei Einsätzen darüber Kartoffeln bzw. Gemüse gegart werden, wobei der Einsatz mit den Kartoffeln bzw. der Einsatz mit dem Gemüse zeitversetzt aufgestapelt wird. Das besondere an dem erfindungsgemäßen Kochgefäß ist darüber hinaus, dass unterschiedliche Einsätze auch während des Dämpfens bzw. während des Garprozesses eingesetzt, ausgewechselt oder entnommen werden können, so dass jeder Einsatz und damit das in dem jeweiligen Einsatz liegende Dampf-Gargut mit der exakt vorgegebenen Garzeit gegart werden kann. Darüber hinaus kann die Gartemperatur dadurch beeinflusst werden, dass bspw. Gargut mit einer hohen Gartemperatur unten und Gargut mit einer niedrigeren Gartemperatur an einer eher höheren Stelle des Kochgefäßes angeordnet werden. Denkbar ist dabei selbstverständlich auch, dass zwischen einzelnen Einsätzen mit jeweils unterschiedlichem Gargut leere Einsätze eingesetzt werden, die lediglich dazu dienen, die Gartemperatur exakt einzustellen. Durch das gleichzeitige bzw. auch zeitversetzte Garen kann drüber hinaus erreicht werden, dass auf einer einzigen Brennstelle gleichzeitig mehrere Speisen, wie bspw. Fleisch, Kartoffeln oder Gemüse, zubereitet werden können, wodurch ein besonders energiesparender Garprozess erzielt werden kann. Unter Garprozess, das heißt unter dem Begriff Garen, soll hier besonders ein feuchtes Garen, das heißt ein Dämpfen verstanden werden. Zusätzlich ist der wenigstens eine Einsatz aus transparentem Kunststoff ausgebildet. Eine derartige Ausbildung bietet zum einen den Vorteil, dass der jeweilige Einsatz vergleichsweise leicht und dadurch leicht handhabbar ist und zum anderen erlaubt ein transparenter Einsatz die Sicht auf das zu garende Gargut, wodurch ein besonderes Kocherlebnis generiert werden kann. Darüber hinaus ermöglicht die Ausbildung des Einsatzes aus Kunststoff eine kostengünstige Herstellung desselben sowie eine nahezu beliebig frei wählbare Form- und Farbgebung.

Bei einer vorteilhaften Weiterbildung der erfindungsgemäßen Lösung, weist der wenigstens eine Einsatz zumindest einen wärmeisolierten Griff auf. Derartige wärmeisolierte Griffe sind an vielen Kochgefäßen bereits Standard und führen bei dem erfindungsgemäßen Kochgefäß dazu, dass die einzelnen Einsätze auch während des Garprozesses einfach eingesetzt, ausgetauscht oder entnommen werden können. Hierdurch lässt sich der Garprozess besonders individuell gestalten.

Zweckmäßig weist der wenigstens eine Einsatz ein rand- und bodenseitig verlaufendes Dichtelement auf, mit welchem er vorzugsweise dampf- aber nicht druckdicht auf einem darunter angeordneten Einsatz oder auf den Gefäßkörper aufliegt. Das rand- und bodenseitig verlaufende Dichtelement ist dabei in der Art eines Dichtrings ausgebildet und erfüllt prinzipiell zweierlei Funktionen: Zum einen ermöglicht er ein dampfdichtes Stapeln der einzelnen Einsätze aufeinander während des Garprozesses und zum anderen erhöht er die Haftreibung eines bspw. auf einem Tisch abgestellten Einsatzes, wodurch dessen Stand und Position stabilisiert werden kann. Das Dichtelement ist dabei vorzugsweise aus Kunststoff, insbesondere aus Silikon, ausgebildet und ggf. zu Reinigungszwecken vom Einsatz abnehmbar.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: ein erfindungsgemäßes Kochgefäß in einer Schnittdarstellung,
- Fig. 2: eine Darstellung wie in Fig. 1, jedoch bei einer Explosionsdarstellung,
- Fig. 3: eine mögliche Ausführungsform eines Einsatzes,
- Fig. 4: eine Darstellung wie in Fig. 3, jedoch bei aus dem Einsatz herausgelöstem Rahmen,
- Fig. 5: eine Darstellung wie in Fig. 4, jedoch aus einer anderen Perspektive.

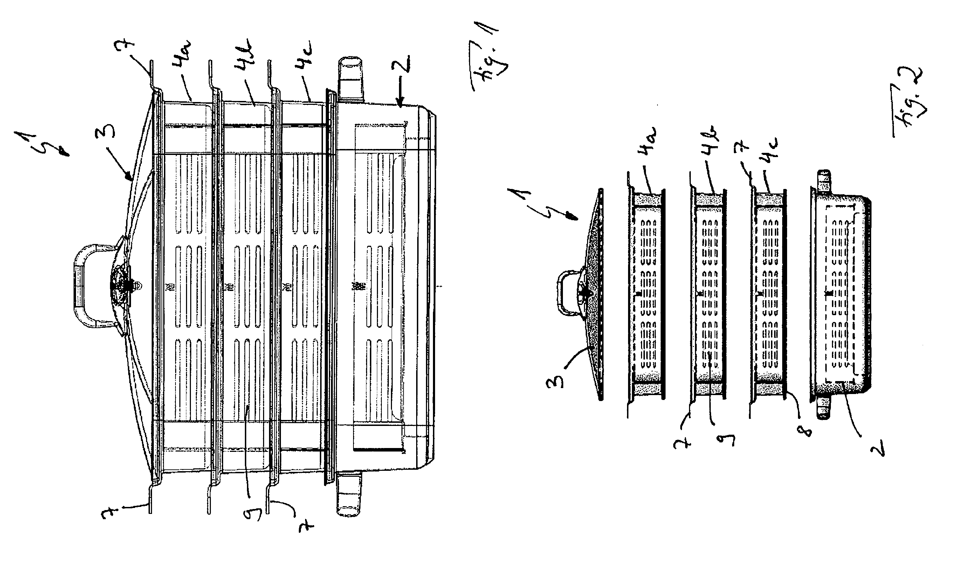

Entsprechend den Fig. 1 und 2, weist ein erfindungsgemäßes Kochgefäß 1, insbesondere ein Dampfgarer bzw. Dämpfer, einen Gefäßkörper 2 sowie einen Deckel 3 auf. Zwischen dem Gefäßkörper 2 und dem Deckel 3 sind dabei insgesamt drei Einsätze 4a, 4b und 4c angeordnet, in welchem jeweils entsprechendes Gargut positionierbar ist. Die Anzahl der Einsätze 4 ist dabei gemäß den Fig. 1 und 2 lediglich rein exemplarisch zu verstehen, so dass das erfindungsgemäße Kochgefäß 1 aus zumindest dem Gefäßkörper 2, dem Deckel 3 und einem dazwischen liegenden einzelnen Einsatz 4 besteht. Optional können dabei zwischen dem Gefäßkörper 2 und dem Deckel 3 eine nahezu beliebige Anzahl von Einsätzen 4 angeordnet werden.

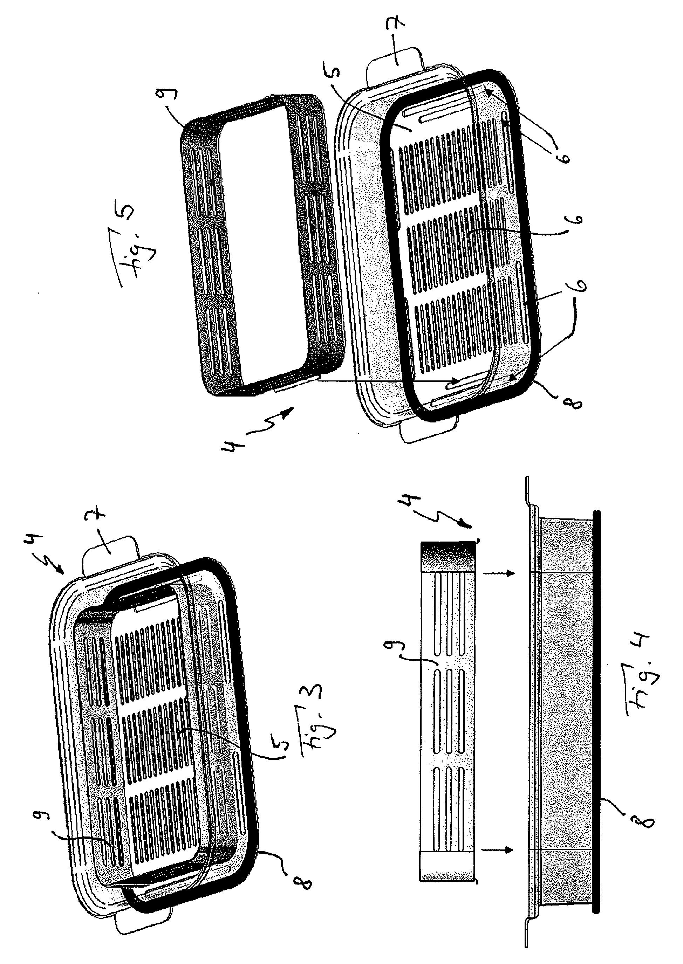

Die Einsätze 4 weisen dabei einen dampfdurchlässigen Boden 5 auf (vgl. Fig. 3 und 5) wobei der Dampf durch entsprechende Durchlassöffnungen 6 im Boden 5 tritt. Mit dem erfindungsgemäßen Kochgefäß 1 ist es somit möglich, Speisen mit unterschiedlichen Garzeiten und unterschiedlichen Gartemperaturen mit nur einem einzigen Kochgefäß 1 nahezu zeitgleich oder lediglich geringfügig zeitversetzt zuzubereiten, wodurch sich einerseits ein Reinigungsaufwand minimiert und andererseits ein besonders energiesparender Kochprozess gewährleistet werden kann.

Um eine gefahrlose Handhabung des zumindest einen Einsatzes 4 gewährleisten zu können, weist dieser zumindest einen wärmeisolierten Griff 7, gemäß den Fig. 1 bis 5 jeweils zwei wärmeisolierte Griffe 7 auf. Hierdurch ist es möglich, einen beliebigen Einsatz 4 auch während des Garprozesses vom Gefäßkörper 3 zu entnehmen, auszutauschen oder einem neuen Einsatz 4 auf den Gefäßkörper 2 bzw. auf einen bereits auf diesem angeordneten Einsatz 4 aufzustapeln. Generell sind dabei ein unterer und ein oberer Bereich des jeweiligen Einsatzes 4 derart ausgestaltet, dass mehrere Einsätze 4 formschlüssig aufeinander stapelbar sind.

Betrachtet man die Fig. 2 bis 5, so kann man erkennen, dass der wenigstens eine aufgezeigte Einsatz 4 ein rand- und bodenseitig verlaufendes Dichtelement 8 aufweist, mit welchem er vorzugsweise dampf- aber nicht unbedingt druckdicht auf einem darunter angeordneten Einsatz 4 oder auf dem Gefäßkörper 2 aufgelegt werden kann. Das Dichtelement 8 ist dabei aus Kunststoff, insbesondere aus Silikon, ausgebildet und dient dabei während des Garprozesses als Dichtung und bei einem bspw. auf einer Tischoberfläche abgestellten Einsatz 4 als Rutschsicherung. Das Dichtelement 8 ist dabei vorzugsweise vom Einsatz 4 abnehmbar, wodurch die Reinigung sowohl des Einsatzes 4 als auch des Dichtelements 8 vereinfacht wird.

Betrachtet man insbesondere die Fig. 4 und 5, so kann man erkennen, dass der wenigstens eine dort gezeigte Einsatz 4 einen innenliegenden, dampfdurchlässigen Rahmen 9 aufweist, der mit dem dampfdurchlässigen Boden 5 des Einsatzes 4 fest verbindbar, insbesondere über spezielle Clipselemente verclipsbar ist. Der Rahmen 9 kann dabei bspw. aus Metall ausgebildet sein, während der Einsatz 4 generell aus Kunststoff, insbesondere aus transparentem Kunststoff, ausgebildet ist, um dadurch eine Sicht auf das zu garende Gargut zu erlauben. Von weiterem Vorteil bei einem aus Kunststoff ausgebildeten Einsatz 4 ist, dass dieser ein vergleichsweise geringes Gewicht aufweist und darüber hinaus hygienisch, da einfach zu reinigen, ist. Durch den dampfdurchlässigen Rahmen 9 kann eine Funktionsverbesserung erreicht werden, da zwischen dem eingesetzten Rahmen 9 und einer Außenwand des Einsatzes 4 dampfdurchlässige Schlitze dafür sorgen, dass bei eingelegten Lebensmitteln innerhalb der Rahmens 9 trotzdem eine Konvektion des Dampfes in einen oberen Einsatz 4 gewährleistet ist.

Das gemäß den Fig. 1 bis 5 gezeigte Kochgefäß 1 ist dabei als Dampfgarer bzw. Dämpfer ausgebildet, wobei selbstverständlich auch eine runde oder ovale Form des Kochgefäßes 1 denkbar ist, ohne den Rahmen der vorliegenden Erfindung zu verlassen.

Mit dem erfindungsgemäßen Kochgefäß 1 ist es prinzipiell möglich, eine größere Menge an unterschiedlichen Speisen zeitgleich oder zumindest nahezu zeitgleich zuzubereiten, wobei bspw. im Gefäßkörper 2 Fleisch, im Einsatz 4c Kartoffeln und im Einsatz 4a Gemüse angeordnet werden kann. Der Einsatz 4d kann bspw. leer bleiben, um die Gartemperatur im Einsatz 4a zu verringern. Selbstverständlich können die einzelnen Einsätze 4a, 4b und 4c während des Garprozesses beliebig eingesetzt, ausgewechselt oder ganz entnommen werden, wobei durch ein individuelles Anordnen der einzelnen Einsätze 4a, 4b und 4c ein im Kochgefäß 1 zur Verfügung stehender Garraum individuell vergrößert oder verkleinert werden kann. Da zudem denkbar ist, dass eine komplette Mahlzeit in lediglich einem einzigen Kochgefäß 1 auf nur einer einzigen Brennstelle zubereitet werden kann, bietet das erfindungsgemäße Kochgefäß 1 eine ideale Lösung sowohl einen Reinigungsaufwand als auch einen Energieaufwand zu reduzieren.

## Patentansprüche

1. Kochgefäß (1) mit einem Gefäßkörper (2) und einem Deckel (3), wobei
- zumindest ein auf den Gefäßkörper (2) stapelbarer Einsatz (4) vorgesehen ist, auf den wahlweise ein weiterer Einsatz (4) oder der Deckel (3) aufsetzbar ist,
- der wenigstens eine Einsatz (4) einen dampfdurchlässigen Boden (5) aufweist, wobei der Dampf durch entsprechende Durchlassöffnungen (6) im Boden (5) tritt,
- der wenigstens eine Einsatz (4) einen innenliegenden Rahmen (9) mit dampfdurchlässige Schlitzen aufweist,
- zwischen dem eingesetzten Rahmen (9) und einer Außenwand des Einsatzes (4) gelegene dampfdurchlässige Schlitze/Durchlassöffnungen (6) im Boden (5) dafür sorgen, dass bei eingelegten Lebensmitteln innerhalb des Rahmens (9) trotzdem eine Konvektion des Dampfes in einen oberen Einsatz (4) gewährleistet ist.
**dadurch gekennzeichnet,**
**dass** der wenigstens eine Einsatz (4) aus transparentem Kunststoff ausgebildet ist.

2. Kochgefäß nach Anspruch 1,
**dadurch gekennzeichnet,**
**dass** der wenigstens eine Einsatz (4) zumindest einen wärmeisolierten Griff (7) aufweist.

3. Kochgefäß nach Anspruch 1 oder 2,
**dadurch gekennzeichnet,**
**dass** der wenigstens eine Einsatz (4) ein rand- und bodenseitig verlaufendes Dichtelement (8) aufweist, mit welchem er vorzugsweise dampf- aber nicht druckdicht auf einem darunter angeordneten Einsatz (4) oder auf dem Gefäßkörper (2) aufliegt.

4. Kochgefäß nach einem der Ansprüche 1 bis 3,
**dadurch gekennzeichnet,**
**dass** der Rahmen (9) mit dem dampfdurchlässigen Boden (5) des Einsatzes (4) fest verbindbar, insbesondere verclipsbar, ist.

5. Kochgefäß nach Anspruch 4,
**dadurch gekennzeichnet,**
**dass** der Rahmen (9) aus Metall ausgebildet ist.

6. Kochgefäß nach einem der Ansprüche 1 bis 5,
**dadurch gekennzeichnet,**
**dass** das Kochgefäß (1) als Dampfgarer ausgebildet ist.

## Claims

1. A cooking vessel (1), comprising a vessel body (2) and a lid (3), wherein
- provision is made for at least one insert (4), which can be stacked onto the vessel body (2) and to which a further insert (4) or the lid (3) can optionally be attached,
- the at least one insert (4) encompasses a steam-permeable bottom (5), wherein the steam passes through corresponding outlets (6) in the bottom (5),
- the at least one insert (4) encompasses an interior frame (9) comprising steam-permeable slits,
- steam-permeable slits/openings (6) in the bottom (5), which are located between the inserted frame (9) and an outer wall of the insert (4), ensure that, when food is placed within the frame (9), a convection of the steam in an upper insert (4) is nonetheless ensured,
**characterized in**
**that** the at least one insert (4) is made of transparent plastic.

2. The cooking vessel according to claim 1, **characterized in that** the at least one insert (4) encompasses at least one heat-insulated handle (7).

3. The cooking vessel according to claim 1 or 2, **characterized in that** the at least one insert (4) encompasses a sealing element (8), which runs on the edge and bottom side, by means of which it preferably rests on an insert (4), which is arranged therebelow, or on the cooking vessel (2), preferably in a steam-tight, but not pressure-tight manner.

4. The cooking vessel according to one of claims 1 to 3, **characterized in that** the frame (9) can be fixedly connected to the steam-permeable bottom (5) of the insert (4), in particular by means of clipping.

5. The cooking vessel according to claim 4, **characterized in that** the frame (9) is made of metal.

6. The cooking vessel according to one of claims 1 to 5, **characterized in that** the cooking vessel (1) is embodied as a steamer.

## Revendications

1. Récipient de cuisson (1), avec au moins un corps de récipient (2) et un couvercle (3),
- au moins un insert (4) empilable sur le corps de récipient (2) sur lequel au choix un insert (4) supplémentaire ou le couvercle (3) peut être posé étant prévu,
- l'au moins un insert (4) comportant un fond (5) perméable à la vapeur, la vapeur pénétrant dans le fond (5) à travers des orifices de passage (6) correspondants,
- l'au moins un insert (4) comportant un cadre (9) interne avec des encoches perméables à la vapeur,
- des encoches / orifices de passage dans le fond (5) placé(e)s entre le cadre (9) inséré et une paroi extérieure de l'insert (4) assurant que lorsque des produits alimentaires sont placés à l'intérieur du cadre (9), une convection de la vapeur dans l'insert (4) supérieur soit malgré tout assurée,
**caractérisé en ce que**
l'au moins un insert (4) est conçu en matière plastique transparente.

2. Récipient de cuisson selon la revendication 1, **caractérisé en ce que** l'au moins un insert (4) comporte au moins une poignée (7) à isolation thermique.

3. Récipient de cuisson selon la revendication 1 ou la revendication 2, **caractérisé en ce que** l'au moins un insert (4) comporte un élément d'étanchéité (8) s'étendant côté bord et côté fond, par lequel il repose de préférence de manière étanche à la vapeur mais non pas à la pression sur un insert (4) sous-jacent ou sur le corps du récipient (2).

4. Récipient de cuisson selon l'une quelconque des revendications 1 à 3, **caractérisé en ce que** le cadre (9) peut être relié fixement, notamment clipsé sur le fond (5) perméable à la vapeur de l'insert (4).

5. Récipient de cuisson selon la revendication 4, **caractérisé en ce que** le cadre (9) est conçu en métal.

6. Récipient de cuisson selon l'une quelconque des revendications 1 à 5, **caractérisé en ce que** le récipient de cuisson (1) est conçu en tant que cuiseur vapeur.
